# FASCICULE DE BREVET EUROPEEN

(11) **EP 0 772 113 B1**
(45) Date de publication et mention de la délivrance du brevet: **22.03.2000**
(21) Numéro de dépôt: 96402307.1
(22) Date de dépôt: 30.10.1996
(51) Int. Cl.: G05G 1/14, B60K 26/02

(54) **Dispositif de liaison entre une pédale d'accélérateur et un organe de commande d'un moteur de véhicule**
Verbindungsvorrichtung zwischen einem Gaspedal und einem Steuerorgan eines Fahrzeugmotors
Connector device between an accelerator pedal and a control of a vehicle engine

(30) Priorité: 31.10.1995 FR 9512835
(43) Date de publication de la demande: 07.05.1997
(73) Titulaire: AUTOMOBILES PEUGEOT, 75116 Paris (FR); AUTOMOBILES CITROEN, 92200 Neuilly-sur-Seine (FR)
(72) Inventeur: Le Goaper, Yves, 92250 La Garenne Colombes (FR)
(74) Mandataire: Gendraud, Pierre

(56) Documents cités:
- EP-A- 0 526 724
- DE-A- 2 100 787
- GB-A- 2 000 093
- US-A- 2 803 971
- US-A- 4 263 999

## Description

L'invention est relative à un dispositif de liaison entre une pédale d'accélérateur et un organe de commande d'un moteur de véhicule.

Elle se rapporte plus précisément aux dispositifs assurant l'articulation entre la pédale d'accélérateur et une tige pivotante d'actionnement d'un potentiomètre relié à un calculateur du moteur de manière à lui transmettre l'information de charge -ou puissance du moteur- souhaitée par le conducteur de véhicule, cette charge variant d'une valeur nulle à une valeur maximale quand la tige pivote d'une position de repos à une position de butée correspondant respectivement à des positions haute et basse de la pédale.

Cette position basse de la pédale étant obtenue par une poussée du pied du conducteur, il est souhaitable que cette poussée ne soit pas transmise, pour la charge maximale, à des éléments de butée internes au potentiomètre qui délimitent la position de butée de la tige, afin que cette poussée, si elle est excessive, ne détériore pas ces éléments de butée ou ne fasse pas fléchir la tige.

A cet effet, il est connu de limiter la course de la pédale à sa position basse par mise en appui sur le plancher du véhicule, comme divulgué dans le document GB 2 000 093 A par exemple.

Du fait des dispersions dans les emplacements relatifs entre le potentiomètre et la pédale, un réglage est nécessaire pour obtenir la simultanéité de cet appui de la pédale sur le plancher et de la mise en position de butée de la tige. Ce réglage peut s'effectuer aisément en atelier quand la pédale et le potentiomètre sont pré-assemblés sur un support commun, mais celui-ci ainsi équipé s'avère encombrant et difficile à mettre en place sur le plancher du véhicule. Quand la pédale et le potentiomètre sont fixés indépendamment au plancher, le réglage en question peut s'effectuer par des moyens d'appui réglables, par exemple à pièces filetées, dont la mauvaise accessibilité derrière la pédale rend difficile la mise au point correcte.

L'invention vise à faciliter ce dernier type de réglage d'une pédale d'accélérateur en position basse lorsque la tige est en position de butée correspondant à la charge maximale du moteur.

Elle concerne un dispositif de liaison entre une pédale d'accélérateur et une tige d'actionnement d'un organe de commande de moteur fixé au plancher d'un véhicule, la pédale et la tige s'étendant sensiblement suivant une même direction longitudinale et pivotant respectivement sur le plancher et sur l'organe autour de deux axes sensiblement parallèles transversaux à la susdite direction entre une position haute et position basse de la pédale correspondant respectivement à une position de repos et une position de butée de la tige, cette position de butée étant déterminée par un élément interne à l'organe et propre à coopérer avec la tige toujours espacée du plancher.

Ce dispositif est caractérisé en ce qu'il comporte une pièce de liaison qui s'articule sur la pédale autour d'un troisième axe parallèle à celui de pivotement de la pédale et qui présente d'une part une lumière sensiblement parallèle à la susdite direction et dans laquelle pivote et coulisse une extrémité transversale de la tige, et d'autre part une extrémité accrochée à une partie de la pédale par un moyen cranté élastique formant un arc centré sur le troisième axe et permettant, lors du montage du véhicule, par poussée de la pédale jusqu'à sa position basse, d'amener la tige à sa position de butée puis de soulever la pièce de liaison dans la pédale, d'une position inférieure préalable à une position d'utilisation où elle est maintenue par le moyen cranté.

Suivant quelques dispositions intéressantes de l'invention :
- le moyen cranté comporte une cloison crantée en matière plastique solidaire de la pédale ;
- cette cloison relie deux flasques parallèles de la pédale, perpendiculaires aux axes de pivotement et portant celui de la pièce de liaison ;
- les deux flasques saillant perpendiculairement d'une paroi supérieure formant semelle de la pédale, la pièce de liaison est logée entre les deux flasques et entre la semelle et une paroi inférieure reliant les flasques et constituant une butée pour la pièce de liaison dans sa position inférieure préalable de montage.

Un mode de réalisation du dispositif selon l'invention est décrit ci-après, avec référence au dessin annexé sur lequel :
- la figure 1 est une vue en coupe partielle par un plan vertical longitudinal d'une pédale d'accélérateur et d'un organe de commande disposés sur un plancher de véhicule, en deux positions de fonctionnement et une position de montage ;
- la figure 2 est une vue d'une partie du dispositif, en coupe suivant la ligne II-II de la figure 1 ;
- et la figure 3 est une vue d'une partie du dispositif, en coupe suivant la ligne III-III de la figure 2.

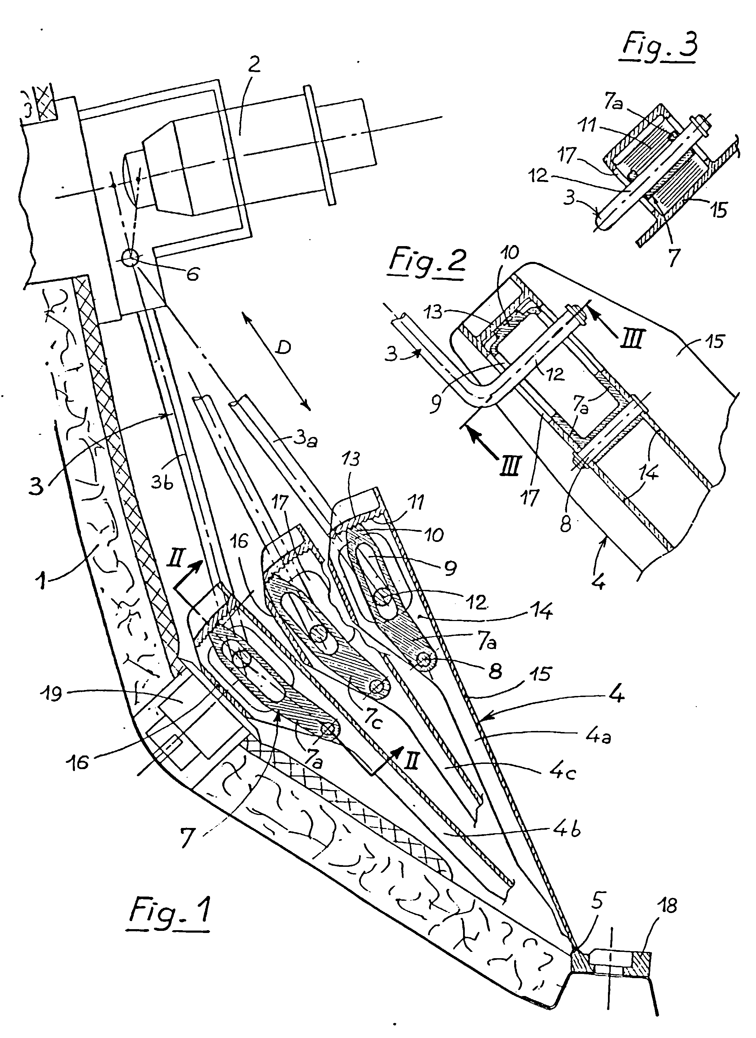

On voit à la figure 1, fixé sur un plancher 1 de véhicule automobile, un organe de commande 2 qui est un potentiomètre relié électriquement à un calculateur du moteur du véhicule et mécaniquement, par une tige 3, à une pédale d'accélérateur 4.

La pédale 4 et la tige 3 s'étendent sensiblement suivant une même direction longitudinale D et pivotent respectivement sur le plancher 1 et sur l'organe 2 autour d'axes 5 et 6 sensiblement parallèles et transversaux à la direction D entre une position haute 4a et une position basse 4b de la pédale correspondant respectivement à une position de repos 3a et une position de butée 3b de la tige.

Le potentiomètre transmet au calculateur l'information de charge -ou puissance du moteur- souhaitée par le conducteur du véhicule, cette charge variant d'une valeur nulle à une valeur maximale quand la tige pivote de sa position de repos 3a à sa position de butée 3b déterminée par un élément de butée, non visible sur les figures, interne à l'organe 2, la tige restant toujours écartée du plancher.

Selon l'invention, une pièce de liaison ou palette 7 s'articule sur la pédale 4 autour d'un axe 8 parallèle aux deux autres 5 et 6 et présente une lumière 9 sensiblement parallèle à la direction D et une extrémité dentée 10 accrochée sur une face interne crantée 11 de la pédale.

La lumière 9 reçoit une portion transversale 12 d'extrémité de la tige 3. Cette portion, parallèle aux trois axes 5, 6 et 8, peut pivoter et coulisser dans la lumière 9, ou plus précisément dans deux lumières 9 identiques pratiquées dans deux flancs latéraux 7a de la palette 7 réalisée en matière plastique.

La face crantée 11 forme un arc de cercle centré sur l'axe 8 et elle délimite une cloison transversale 13 de la pédale. Cette cloison est relativement mince et déformable élastiquement, étant réalisée en matière plastique comme l'ensemble de la pédale et reliant deux flasques parallèles 14 qui saillent perpendiculairement d'une paroi supérieure formant semelle 15 de la pédale, et qui s'étendent perpendiculairement aux axes 5 et 8 de pivotement de la pédale et de la palette.

L'axe 8 est porté par ces flasques 14, et ceux-ci sont adjacents aux flancs 7a de la pièce de liaison 7, qui est logée entre eux et entre la semelle 15 et une paroi inférieure 16 reliant les flasques et suffisamment écartée de la semelle pour permettre à la pièce 7 de pivoter d'une position inférieure où elle bute sur cette paroi 16 et une position supérieure où elle bute sur la semelle. Les flasques 14 comportent chacun une ouverture 17 permettant le passage de la portion 12 de la tige.

Ce pivotement de la palette 7 peut s'effectuer en exerçant sur elle un effort suffisant pour que son extrémité dentée 10 écarte la cloison crantée 13 en la faisant fléchir élastiquement. La résistance à la flexion de cette cloison est adaptée pour permettre un maintien constant de la pièce 7 dans sa position d'utilisation, visible à la figure 1 dans les positions haute 4a et basse 4b de la pédale.

Cette position d'utilisation de la pièce de liaison 7 est obtenue de la façon suivante lors du montage de la pédale sur le véhicule, après fixation de l'organe de commande 2 sur le haut du plancher 1 :
- la portion 12 de la tige 3 est engagée, par les ouvertures 17 des flasques 14, dans les lumières 9 de la pièce de liaison 7 préalablement mise en place dans la pédale 4 en position inférieure 7c où elle bute sur la paroi inférieure 16 -comme visible à la figure 1 dans la position intermédiaire 4c de la pédale ;
- puis la pédale est fixée au plancher, de façon usuelle non représentée, par son embase 18 reliée à sa semelle 15 par l'articulation 5;
- ensuite, une poussée est exercée sur la semelle 15 en direction du plancher, ce qui abaisse l'ensemble de la pédale 4 et de la tige 3 jusqu'à ce que celle-ci atteigne sa position 3b de butée ;
- la pédale étant alors encore légèrement écartée du plancher, la poussée est poursuivie jusqu'à ce que, la tige 3 étant immobile dans sa position 3b, ainsi donc que sa portion 12 dans la lumière 9 de la palette 7, la paroi inférieure 16 de la pédale atteigne le plancher 1 -au droit d'une butée appropriée 19- en provoquant un écartement entre cette paroi 16 et la palette 7, c'est-à-dire un soulèvement de celle-ci dans la pédale, de sa position inférieure préalable de montage à sa position d'utilisation où elle sera maintenue par le moyen de crantage élastique 10,11,13 lors du relâchement de la pédale et lors de toute utilisation de celle-ci.

Grâce à ce dispositif, une poussée même excessive sur la pédale ne risque pas d'endommager l'organe de commande 2 au droit de sa tige ou de ses éléments de butée internes puisque la pédale 4 et la tige 3 atteignent alors simultanément leurs positions respectives d'appui sur le plancher et de butée de charge maximale du moteur.

De plus, son montage s'avère particulièrement aisé puisque le réglage de la position relative entre la tige et la pédale procurant cette simultanéité d'appui et de butée ne nécessite qu'une simple poussée sur la pédale, évitant les habituelles opérations de réglage rendues délicates par la mauvaise accessibilité à la tige de l'organe de commande.

## Revendications

1. Dispositif de liaison entre une pédale d'accélérateur (4) et une tige (3) d'actionnement d'un organe (2) de commande de moteur fixé au plancher (1) d'un véhicule, la pédale et la tige s'étendant sensiblement suivant une même direction longitudinale (D) et pivotant respectivement sur le plancher (1) et sur l'organe (2) autour de deux axes (5,6) sensiblement parallèles transversaux à la susdite direction (D) entre une position haute (4a) et position basse (4b) de la pédale correspondant respectivement à une position de repos (3a) et une position de butée (3b) de la tige, cette position de butée étant déterminée par un élément interne à l'organe et propre à coopérer avec la tige (3) toujours espacée du plancher,
caractérisé en ce qu'il comporte une pièce de liaison (7) qui s'articule sur la pédale (4) autour d'un troisième axe (8) parallèle à celui de pivotement de la pédale (4) et qui présente d'une part une lumière (9) sensiblement parallèle à la susdite direction (D) et dans laquelle pivote et coulisse une extrémité transversale (12) de la tige, et d'autre part une extrémité (10) accrochée à une partie (13) de la pédale par un moyen cranté élastique (11,13) formant un arc centré sur le troisième axe (8) et permettant, lors du montage du véhicule, par poussée de la pédale (4) jusqu'à sa position basse (4b), d'amener la tige (3) à sa position de butée (3b) puis de soulever la pièce de liaison (7) dans la pédale, d'une position inférieure préalable (7c) à une position d'utilisation (7a) où elle est maintenue par le moyen cranté (11,13).

2. Dispositif selon la revendication 1,
caractérisé en ce que le moyen cranté (11,13) comporte une cloison crantée (13) en matière plastique solidaire de la pédale.

3. Dispositif selon la revendication 2,
caractérisé en ce que cette cloison (13) relie deux flasques parallèles (14) de la pédale, perpendiculaires aux axes (5,6,8) de pivotement et portant celui (8) de la pièce de liaison (7).

4. Dispositif selon la revendication 3,
caractérisé en ce que les deux flasques (14) saillant perpendiculairement d'une paroi supérieure formant semelle (15) de la pédale, la pièce de liaison (7) est logée entre les deux flasques (14) et entre la semelle (15) et une paroi inférieure (16) reliant les flasques et constituant une butée pour la pièce de liaison (7) dans sa position inférieure (7c) préalable de montage.

## Patentansprüche

1. Verbindungsvorrichtung zwischen einem Gaspedal (4) und einer Betätigungsstange (3) eines Motorsteuerorgans (2), das am Boden (1) eines Fahrzeugs befestigt ist, wobei das Pedal und die Stange sich im wesentlichen in der gleichen Längsrichtung (D) erstrecken und je zum Boden (1) und zum Organ (2) um zwei quer zur Richtung (D) liegenden, im wesentlichen parallele Achsen (5, 6) zwischen einer oberen Stellung (4a) und einer unteren Stellung (4b) des Pedals schwenken, die je einer Ruhestellung (3a) bzw. einer Anschlagstellung (3b) der Stange entsprechen, wobei diese Anschlagstellung durch ein organinternes Element bestimmt wird, das mit der immer vom Boden entfernten Stange (3) zusammenwirken kann,
dadurch gekennzeichnet, daß sie ein Verbindungsteil (7) aufweist, das am Pedal (4) um eine dritte Achse (8) parallel zur Schwenkachse des Pedals (4) angelenkt ist und das einerseits ein Langloch (9) im wesentlichen parallel zur Richtung (D), in dem ein Querende (12) der Stange schwenkt und gleitet, und andererseits ein Ende (10) aufweist, das an einem Teil (13) des Pedals durch ein elastisches, mit Rastkerben versehenes Mittel (11, 13) eingehakt ist, das einen Bogen bildet, der auf die dritte Achse (8) zentriert ist und es bei der Montage des Fahrzeugs durch Druck auf das Pedal (4) bis in seine untere Stellung (4b) ermöglicht, die Stange (3) in ihre Anschlagstellung (3b) zu bringen und dann das Verbindungsteil (7) im Pedal von einer vorläufigen, unteren Stellung (7c) in eine Betriebsstellung (7a) anzuheben, in der es durch das mit Rastkerben versehene Mittel (11, 13) gehalten wird.

2. Vorrichtung nach Anspruch 1, dadurch gekennzeichnet, daß das mit Rastkerben versehene Mittel (11, 13) eine mit Rastkerben versehene Trennwand (13) aus Kunststoffmaterial aufweist, die fest mit dem Pedal verbunden ist.

3. Vorrichtung nach Anspruch 2, dadurch gekennzeichnet, daß diese Trennwand (13) zwei parallele Flansche (14) des Pedals verbindet, die senkrecht zu den Schwenkachsen (5, 6, 8) liegen, und diejenige (8) des Verbindungsteils (7) tragen.

4. Vorrichtung nach Anspruch 3, dadurch gekennzeichnet, daß die beiden Flansche (14) senkrecht von einer oberen Wand vorstehen, die die Sohle (15) des Pedals bildet, wobei das Verbindungsteil zwischen den beiden Flanschen (14) und zwischen der Sohle (15) und einer unteren Wand (16) angeordnet ist die Flansche verbindet und einen Anschlag für das Verbindungsteil (7) in seiner vorläufigen, unteren Montagestellung (7c) bildet.

## Claims

1. Connection device between an accelerator pedal (4) and a rod (3) for actuating an engine control unit (2) fixed to the floor (1) of a vehicle, the pedal and the rod extending substantially in the same longitudinal direction (D) and pivoting respectively on the floor (1) and on the unit (2) about two substantially parallel axes (5, 6) transverse to the aforementioned direction (D) between an upper position (4a) and a lower position (4b) of the pedal corresponding respectively to a rest position (3a) and a limiting position (3b) of the rod, this limiting position being determined by a member within the unit and capable of co-operating with the rod (3) always at a distance from the floor,
characterised in that it comprises a connecting piece (7), which is articulated to the pedal (4) about a third axis (8) parallel to the axis of pivoting of the pedal (4), and which has on the one hand an aperture (9) substantially parallel to said direction (D) and within which there pivots and slides a transverse end (12) of the rod and, on the other hand, an end (10) caught on a part (13) of the pedal by a resilient notched means (11, 13) forming an arc centred over the third axis (8) and making it possible, when the vehicle is assembled, by pushing the pedal (4) to its lower position (4b), to bring the rod (3) to its limiting position (3b) then to raise the connecting piece (7) in the pedal, from a preliminary lower position (7c) to a position of use (7a) where it is held by the notched means (11, 13).

2. Device according to Claim 1,
characterised in that the notched means (11, 13) comprises a notched partition (13) made of plastic material integral with the pedal.

3. Device according to Claim 2,
characterised in that this partition (13) connects two parallel plates (14) of the pedal, perpendicular to the axes of pivoting (5, 6, 8) and carrying the axis (8) of the connecting part (7).

4. Device according to Claim 3,
characterised in that, the two plates (14) projecting perpendicular from an upper wall forming a sole plate (15) of the pedal, the connecting piece (7) is housed between the two plates (14) and between the sole plate (15) and a lower wall (16) connecting the plates and constituting a stop for the connecting piece (7) in its preliminary lower assembly position (7c).
